Europäisches Patentamt

European Patent Office

Office européen des brevets

(11) Veröffentlichungsnummer: **0 198 144**
**A1**

(12) # EUROPÄISCHE PATENTANMELDUNG

(21) Anmeldenummer: 85730169.1

(22) Anmeldetag: **17.12.85**

(51) Int. Cl.⁴: **F 16 L 58/00,** F 16 L 9/14, C 23 C 22/24, B 05 D 7/16, F 16 L 58/10

(30) Priorität: 16.01.85 DE 3501619
08.03.85 DE 3508811

(43) Veröffentlichungstag der Anmeldung: **22.10.86**
**Patentblatt 86/43**

(84) Benannte Vertragsstaaten: **AT BE CH DE FR GB IT LI NL**

(71) Anmelder: **MANNESMANN Aktiengesellschaft,**
**Mannesmannufer 2, D-4000 Düsseldorf 1 (DE)**

(72) Erfinder: **Stucke, Walter, Portmannweg 8,**
**D-4030 Ratingen (DE)**
Erfinder: **Thomas, Dieter, Noldeweg, D-4010 Hilden (DE)**

(74) Vertreter: **Meissner, Peter E., Dipl.-Ing. et al, Meissner &**
**Meissner Patentanwälte Herbertstrasse 22,**
**D-1000 Berlin 33 Grunewald (DE)**

(54) **Verfahren zum Ummanteln eines Stahlrohres.**

(57) Die Erfindung betrifft ein Verfahren zum Ummanteln eines Stahlrohres mit Polyäthylen, bei dem nach dem Reinigen seiner Oberfläche auf das Stahlrohr mindestens eine Schicht aus Epoxyharz als Haftvermittler und darüber, bevor das Epoxyharz ausgehärtet ist, mindestens eine Kleberschicht aus Äthylencopolymerisat aufgebracht wird. Um ein Verfahren zur Stahlrohrummantelung der gattungsgemäßen Art dahingehend zu verbessern, daß die ummantelten Stahlrohre gegenüber dem Stand der Technik erhöhte Schälfestigkeit unter Feuchtigkeitseinwirkung bei gleichzeitig erhöhter Temperatur (z.B. von bis zu +80°C) und erhöhten Widerstand gegen Unterrostung aufweisen, wird vorgeschlagen, daß die Oberfläche des Stahlrohres chromatiert, vollständig getrocknet und dann das Epoxyharz bei einer Rohrtemperatur von mindestens 200°C aufgetragen wird.

## Verfahren zum Ummanteln eines Stahlrohres

Die Erfindung betrifft ein Verfahren zum Ummanteln eines Stahlrohres gemäß dem Oberbegriff des Patentanspruchs 1.

Es sind zahlreiche Verfahren bekannt, Stahlrohre, insbesondere solche, die im Erdboden verlegt werden, mit einem dem Schutz gegen Korrosion dienenden Überzug aus einem thermoplastischen Kunststoff, wie Polyäthylen oder Polyvinylchlorid zu versehen. Die Verbindung des Überzugs mit dem Stahlrohr erfolgt meistens durch Verkleben. Für das Überziehen der Rohre kann der Kunststoff bekanntlich in Form eines nahtlosen Schlauchs durch Extrudieren unter Verwendung einer ringförmigen Düse, durch die das Rohr hindurchgeführt wird, aufgebracht werden, nachdem die Rohroberfläche mit einem Klebstoff beschichtet worden ist. Es ist auch bekannt, den Kunststoff in Form eines Folienbandes schraubenlinienförmig um das Rohr zu wickeln.

Aus der DE-PS 19 65 802 ist ein Verfahren zum Ummanteln eines Stahlrohres bekannt, bei dem ein gereinigtes Stahlrohr induktiv auf 140 - 200 °C erwärmt und mittels Spritzpistolen mit einer Epoxyharzschicht als Haftvermittler beschichtet wird. Auf die aushärtende Epoxyharzschicht wird dann eine extrudierte Folie aus einem Äthylencopolymerisat als Kleberschicht und darüber eine ebenfalls extrudierte Folie aus Polyäthylen als äußere Mantelschicht aufgetragen.

Eine derartige im Prinzip aus drei Schichten bestehende Ummantelung, deren Einzelschichten selbstverständlich auch jeweils in mehreren Teilschichten aufgetragen werden können, weist ausgezeichnete, gegenüber dem damaligen Stand der Technik verbesserte Korrosionsschutzeigenschaften auf. In manchen Fällen werden jedoch insbesondere hinsichtlich der Schälfestigkeit unter Feuchtigkeitseinwirkung und erhöhter Temperatur (bis 80 °C Dauerlast) und hinsichtlich des Schutzes gegen Unterrostung (cathodic disbonding) sehr hohe Qualitätsanforderungen gestellt, die auch von diesem Ummantelungssystem nicht immer bzw. nicht mit der gewünschten Sicherheit erfüllt werden.

Aufgabe der Erfindung ist es daher, ein Verfahren zur Stahlrohrummantelung der gattungsgemäßen Art dahingehend zu verbessern, daß die ummantelten Stahlrohre gegenüber dem Stand der Technik erhöhte Schälfestigkeit unter Feuchtigkeitseinwirkung bei gleichzeitig erhöhter Temperatur (z.B. von bis zu + 80°C) und erhöhten Widerstand gegen Unterrostung aufweisen.

Gelöst wird diese Aufgabe erfindungsgemäß durch ein Verfahren mit den Merkmalen des Patentanspruchs 1. Vorteilhafte Weiterbildungen des Verfahrens sind in den Unteransprüchen 2 - 14 angegeben.

Im folgenden wird die Erfindung näher erläutert.

Die Verbesserung der Haftung zwischen dem Stahlrohr und der Kunststoffummantelung, deren Einzelschichten auch in jeweils mehreren Teilschichten aufgetragen sein können und die auch mit zusätzlichen Schichten versehen sein kann, etwa als mechanische Schutzschicht (z.B. Zementbeschichtung, Kautschukbeschichtung), wird durch das an sich bekannte Chromatieren der Stahlrohroberfläche erreicht. Wesentliche Bedingungen für das erfindungsgemäße Verfahren sind, daß die Oberfläche des Stahlrohres chemisch und/oder mechanisch gründlich gereinigt (z.B. mindestens entsprechend DIN 55 928) und vor dem Auftragen des Kunststoffs restlos getrocknet ist, damit die Bildung von Dampfblasen unter dem Kunststoff vermieden wird.

Die Ummantelung eines Stahlrohres kann in folgender Weise vorgenommen werden. Ein Stahlrohr von z.B. 159 mm äußerem Durchmesser und 4,5 mm Wanddicke wird durch Strahlen mit gerundetem Stahldrahtkorn, dessen Einzelkorn also keine oder nur wenige scharfe Kanten aufweist, an der zu beschichtenden Oberfläche gründlich gereinigt. Das Stahlstrahlen wird so durchgeführt, daß eine mittlere Rauhtiefe von 40 - 50 µm entsteht. Infolge des gerundeten Stahldrahtkornes weist das Stahlrohr nach der Reinigung ein im Prinzip apfelsinenhautförmiges, d.h. abgeflachtes Oberflächenprofil ohne scharfe Kanten auf.

Das auf Raumtemperatur befindliche Stahlrohr wird dann in einer Kabine, die gegen ein Austreten von Chromatdämpfen in die Umwelt gesichert ist, mit der Chromatierung in ein- bis zweiprozentiger saurer wässriger Lösung (z.B. einer 6-wertigen Chromverbindung, die ein Silikat enthält) durch Übergießen benetzt. Das Benetzen könnte auch auf andere Weise, z.B. mit Hilfe einer Walze oder durch Tauchen in ein entsprechendes Bad erfolgen. Besonders gute Ergebnisse werden erzielt, wenn eine Chromatschicht von 400 - 600 mg/m$^2$ (Trockenschichtgewicht) auf der Stahlrohroberfläche entsteht. Es ist eine gleichmäßig dicke Chromatschicht anzustreben. Dies wird einerseits durch das abgeflachte Oberflächenprofil des Stahlrohres erreicht, das nicht stark zerklüftet ist und daher keine örtlich stärkeren Ansammlungen der Chromatierung begünstigt. Andererseits kann die Schichtdicke durch die Konzentration der wässrigen Lösung beeinflußt werden. Nach dem Auftragen der Chromatierung wird die Oberfläche des Stahlrohres vollständig getrocknet. Dabei ist selbstverständlich zu vermeiden, daß Chromatdämpfe in die Umwelt gelangen. Überschüssiges Material ist daher nicht nur beim eigentlichen Auftragen, sondern auch beim Trocknen unbedingt zurückzugewinnen. Für die Trocknung hat sich insbesondere eine induktive Erwärmung des Stahlrohres auf etwa 180 - 200 °C als vorteilhaft erwiesen. Gegebenenfalls kann auch zusätzliche Wärmeenergie durch Infrarotbestrahlung z.B. kurz vor der Beschichtung mit Epoxyharz aufgebracht werden.

Das erwärmte und getrocknete Stahlrohr wird anschließend bei einer Rohrtemperatur von mindestens 200 °C in einer Beschichtungsstation elektrostatisch mit Epoxyharzpulver in einer Menge besprüht, die einer Trockenfilmdicke von etwa 50 µm entspricht. Aufgrund der in das Stahlrohr eingebrachten Wärme schmilzt das Epoxyharzpulver zu einem geschlossenen Film auf und beginnt auszuhärten. In an sich bekannter Weise wird vor Beendigung der Aushärtung der thermoplastische Kunststoff z.B. durch Aufrecken eines nahtlosen extrudierten Foliendoppelschlauches aus einer inneren z.B. 150 µm dicken Äthylencopolymerisatschicht und einer äußeren z.B. 1,8 mm dicken Polyäthylenschicht auf das Stahlrohr aufgebracht und das Stahlrohr anschließend auf Raumtemperatur abgekühlt.

Das bekannte Ummanteln durch schraubenlinienförmiges Umwickeln mit einer Kleberfolie und einer Folie für die äußere Mantelschicht ist ebenso anwendbar.

Es ist auch möglich, innerhalb des Kunststoffmantels Variationen in den Schichtfolgen durchzuführen, beispielsweise mehrere Kleber- oder mehrere Teilschichten der äußeren Mantelschicht aufzutragen oder Zwischenschichten einzubringen, die aus einer Mischung von Epoxyharz und dem verwendeten Kleber und/oder aus dem Kleber und dem Material der äußeren Mantelschicht bestehen. Letzteres begünstigt einen kontinuierlichen Übergang der unterschiedlichen Materialeigenschaften in den Einzelschichten des gesamten Kunststoffmantels.

Das gemäß dem vorstehenden Beispiel beschichtete Stahlrohr weist unter Einwirkung von Wasser bei + 65 $^{o}$C nach ca. 250 Std. eine Schälfestigkeit von 80 - 100 N/cm und einen Disbondingwert nach ASTM G 8 von 0 - 1 mm auf. Für eine Stahlrohr, das in entsprechender Weise ohne Chromatierung nach dem Stand der Technik mit 50 µm Epoxyharz, 150 µm Äthylencopolymerisat und 1,8 mm Polyäthylen beschichtet wurde, betragen diese Qualitätsdaten 50 - 60 N/cm bzw. 0 - 5 mm.

1

Patentansprüche

1. Verfahren zum Ummanteln eines Stahlrohres mit Polyäthylen, bei dem nach dem Reinigen seiner Oberfläche auf das Stahlrohr mindestens eine Schicht aus Epoxyharz als Haftvermittler und darüber, bevor das Epoxyharz ausgehärtet ist, mindestens eine Kleberschicht aus Äthylencopolymerisat aufgebracht wird, dadurch gekennzeichnet, daß die Oberfläche des Stahlrohres chromatiert, vollständig getrocknet und dann das Epoxyharz bei einer Rohrtemperatur von mindestens 200 $^{o}$C aufgetragen wird.

2. Verfahren nach Anspruch 1, dadurch gekennzeichnet, daß die Chromatierung in einer Trockenschichtdicke von weniger als 1 µm erfolgt.

3. Verfahren nach Anspruch 1 oder 2,
d a d u r c h   g e k e n n z e i c h n e t ,
daß die Chromatierung durch Auftragen einer sauren wässringen
Lösung einer Mischung aus 3-wertigen und 6-wertigen Chromverbindungen mit einem pH-Wert von 2,8 bis 3,5, vorzugsweise von
3,1 erfolgt, die zur Fixierung auf der Rohroberfläche ein anorganisches Bindemittel, z.B. ein Silikat, enthält.

4. Verfahren nach einem der Ansprüche 1 - 3,
d a d u r c h   g e k e n n z e i c h n e t ,
daß das Auftragen der Chromatschicht auf das Stahlrohr durch
Übergießen oder Benetzen mit einer Walze erfolgt.

5. Verfahren nach einem der Ansprüche 1 - 4,
d a d u r c h   g e k e n n z e i c h n e t ,
daß die Stahlrohroberfläche zur Erzielung einer gleichmäßigen
Dicke der Chromatschicht vor dem Chromatieren in der Weise
gereinigt wird, daß ein apfelsinenhautförmiges, abgeflachtes
Oberflächenprofil entsteht.

6. Verfahren nach Anspruch 5,
d a d u r c h   g e k e n n z e i c h n e t ,
daß durch die Reinigung eine mittlere Rauhtiefe von 40 - 50 μm
erzeugt wird.

7. Verfahren nach Anspruch 5 oder 6,
d a d u r c h   g e k e n n z e i c h n e t ,
daß die Reinigung durch Strahlen mit gerundetem Stahlkorn
durchgeführt wird.

8. Verfahren nach einem der Ansprüche 1 - 7,
d a d u r c h   g e k e n n z e i c h n e t ,
daß das Stahlrohr zum Trocknen der Chromatschicht induktiv
erwärmt wird.

9. Verfahren nach einem der Ansprüche 1 - 8, d a d u r c h   g e k e n n z e i c h n e t , daß das Stahlrohr zum vollständigen Trocknen der Chromatschicht vor der Beschichtung mit Epoxyharz infrarot bestrahlt wird.

10. Verfahren nach einem der Ansprüche 1 - 9, d a d u r c h   g e k e n n z e i c h n e t , daß das Trocknen der Chromatschicht bei Temperaturen von 120 - 220 $^{o}$C erfolgt.

11. Verfahren nach einem der Ansprüche 1 - 10, d a d u r c h   g e k e n n z e i c h n e t , daß das Verfahren kontinuierlich erfolgt.

12. Verfahren nach einem der Ansprüche 1 - 11, d a d u r c h   g e k e n n z e i c h n e t , daß das Epoxyharz in Pulverform aufgetragen wird.

13. Verfahren nach einem der Ansprüche 1 - 12, d a d u r c h   g e k e n n z e i c h n e t , daß die Auftragung des Raumtemperatur aufweisenden Chromatierungsmittels bei einer Temperatur der Stahlrohroberfläche von +10 bis +40 $^{o}$C erfolgt.

14. Verfahren nach einem der Ansprüche 3 - 13, d a d u r c h   g e k e n n z e i c h n e t , daß die Mischung aus 3-wertigen und 6-wertigen Chromverbindungen als ein- bis zweiprozentige (Gew.-%) Lösung aufgetragen wird.

**Europäisches Patentamt**

**EUROPÄISCHER RECHERCHENBERICHT**

| | EINSCHLÄGIGE DOKUMENTE | | EP 85730169.1 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - B2 - 2 255 084 (MANNESMANN AG)<br><br>---- | | F 16 L 58/00<br><br>F 16 L 9/14<br><br>C 23 C 22/24<br><br>B 05 D 7/16<br><br>F 16 L 58/10 |

RECHERCHIERTE SACHGEBIETE (Int. Cl.4)

F 16 L 9/00

F 16 L 58/00

C 23 C 22/00

B 05 D 7/00

Der vorliegende Recherchenbericht wurde für alle Patentansprüche erstellt.

| Recherchenort | Abschlußdatum der Recherche | Prüfer |
|---|---|---|
| WIEN | 21-05-1986 | SCHUGANICH |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82